# EUROPEAN PATENT APPLICATION

(11) **EP 4 203 140 A1**
(43) Date of publication of application: **28.06.2023**
(21) Application number: 21859647.6
(22) Date of filing: 22.04.2021
(51) Int. Cl.: H01M 10/48, B60L 58/10

(54) **DETECTION NET, BATTERY CELLS, BATTERY MODULE AND ELECTRIC VEHICLE**

(30) Priority: 24.08.2020 CN 202021786853 U
(71) Applicant: BYD Company Limited, Shenzhen, Guangdong 518118 (CN)
(72) Inventor: TAN, Jing, Shenzhen, Guangdong 518118 (CN); ZHANG, Yongming, Shenzhen, Guangdong 518118 (CN); DING, Xunfeng, Shenzhen, Guangdong 518118 (CN)
(74) Representative: DehnsGermany Partnerschaft von Patentanwälten
(86) International application number: PCT/CN2021/089039
(87) International publication number: WO 2022/041800

(57) **Abstract**

A detection mesh (3), a battery cell (11), a battery module (100), and an electric vehicle (200) are provided. The detection mesh (3) includes a first conductive piece and a second conductive piece. The first conductive piece includes a first lead-out piece (311) and multiple first protrusions (3111) arranged side by side on the first lead-out piece (311). The second conductive piece includes a second lead-out piece (312) and multiple second protrusions (3121) arranged side by side on the second lead-out piece (312). The multiple first protrusions (3111) and the multiple second protrusions (3121) are alternate with each other successively and spaced apart from each other.

## Description

### CROSS-REFERENCE TO RELATED APPLICATIONS

The present disclosure claims priority to Chinese Patent Application No. 202021786853.X, filed by the BYD Co., Ltd. on August 24, 2020 and entitled "DETECTION MESH, BATTERY CELL, BATTERY MODULE, AND ELECTRIC VEHICLE".

### FIELD

The present disclosure relates to the technical field of power supply devices, and more specifically, to a detection mesh, a battery cell, a battery module, and an electric vehicle.

### BACKGROUND

In response to an increasing environmental awareness of people, a growing number of electric vehicles come into people's view. A battery is a main power component of an electric vehicle, and plays a key role in long-term stable operation of the electric vehicle.

A battery cell is a smallest unit of the battery. During operation of the battery, it is difficult for a battery management system to always monitor an operation status of each battery cell. In particular, an electrolyte leakage in the battery cell cannot be detected in time. During the operation of the battery, if the leaked electrolyte is not discharged in time from the battery, a short circuit or even fire and explosion of the battery may be caused.

### SUMMARY

The present disclosure is intended to resolve at least one of the technical problems in the related art. The present disclosure provides a detection mesh. The detection mesh enables simpler and more convenient monitoring of leakage of electrolyte from and ingress of water into battery cells.

A detection mesh includes a first conductive piece and a second conductive piece. The first conductive piece includes a first lead-out piece and multiple first protrusions arranged side by side on the first lead-out piece. The second conductive piece includes a second lead-out piece and multiple second protrusions arranged side by side on the second lead-out piece. The multiple first protrusions and the multiple second protrusions are alternate with each other successively and spaced apart from each other.

Therefore, in a normal state, the multiple first protrusions and the multiple second protrusions are spaced apart from each other, and when adjacent first protrusions and second protrusions are connected through a conductor, the first conductive piece and the second conductive piece are connected, so that desirable monitoring can be provided.

A battery cell includes an enclosure, a cell core assembly, and the detection mesh described in the above embodiment. The cell core assembly is arranged in the enclosure. The cell core assembly includes at least one cell core. The detection mesh is insulatively arranged between the enclosure and the cell core assembly. A connecting port is arranged on the enclosure. The first lead-out piece and the second lead-out piece are both electrically connected to the connecting port.

A battery module includes at least one battery, a battery management system (BMS) system, a tray, and the detection mesh described in the above embodiment. The battery is arranged in the tray. The detection mesh is insulatively arranged between the battery and a bottom surface of the tray. The first lead-out piece and the second lead-out piece are both electrically connected to the BMS.

An electric vehicle includes the battery module described in the above embodiment.

Additional aspects and advantages of the present disclosure are provided in the following description, some of which will become apparent from the following description or may be learned from practices of the present disclosure.

### BRIEF DESCRIPTION OF THE DRAWINGS

The above and/or additional aspects and advantages of the present disclosure will become apparent and comprehensible from the description of the embodiments provided with reference to the following drawings.
FIG. 1 is a schematic structural diagram of a detection mesh according to an embodiment of the present disclosure.
FIG. 2 is a schematic diagram of a disassembled structure of a battery cell according to an embodiment of the present disclosure.
FIG. 3 is a schematic structural diagram of a detection mesh of a battery cell according to an embodiment of the present disclosure.
FIG. 4 is a schematic diagram of an assembled structure of a battery cell according to an embodiment of the present disclosure.
FIG. 5 is a schematic diagram of an assembled structure of a detection mesh of a battery cell and a cell core assembly according to an embodiment of the present disclosure.
FIG. 6 is an enlarged view of A in FIG. 5.
FIG. 7 is a schematic diagram of a disassembled structure of a battery module according to an embodiment of the present disclosure.
FIG. 8 is a schematic diagram of a disassembled structure of a battery module according to an embodiment of the present disclosure.
FIG. 9 is a schematic structural diagram of mating between a battery of a battery module and a detection mesh according to an embodiment of the present disclosure.
FIG. 10 is a side view of mating between a battery of a battery module and a detection mesh according to an embodiment of the present disclosure.
FIG. 11 is an enlarged view of B in FIG. 10.
FIG. 12 is a schematic diagram of an electric vehicle according to an embodiment of the present disclosure.

### DETAILED DESCRIPTION

Embodiments of the present disclosure are described in detail below, and examples of the embodiments are shown in the drawings, where the same or similar elements or the elements having the same or similar functions are represented by the same or similar reference numerals throughout the description. The embodiments described below with reference to the drawings are exemplary and used only for explaining the present disclosure, and should not be construed as a limitation on the present disclosure.

In the description of the present disclosure, it should be understood that orientation or position relationships indicated by the terms such as "center", "up", "down", "left", "right", "vertical", "horizontal", "top", "bottom", "inside", and "outside" are based on orientation or position relationships shown in the drawings, and are used only for ease and brevity of description of the present disclosure, rather than indicating or implying that the mentioned apparatus or element needs to have a particular orientation or needs to be constructed and operated in a particular orientation. Therefore, the terms should not be construed as a limitation on the present disclosure.

It should be noted that the terms "first" and "second" are merely used for description, and should not be construed as indicating or implying relative importance or implicitly indicating a number of technical features that are indicated. Therefore, features defined by "first" and "second" may explicitly or implicitly include one or more such features. Further, in the description of the present disclosure, unless otherwise stated, "multiple" means two or more.

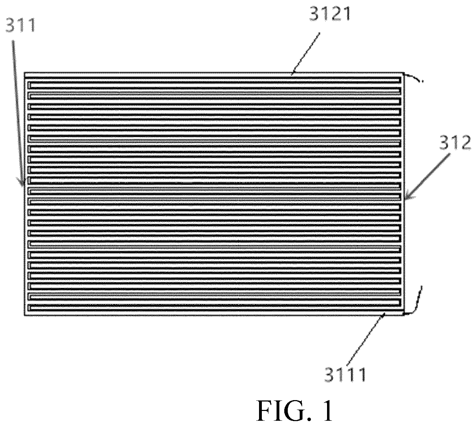

Referring to FIG. 1 to FIG. 11, an embodiment of the present disclosure provides a detection mesh 3, which includes
a first conductive piece and a second conductive piece. Referring to FIG. 1, the first conductive piece includes a first lead-out piece 311 and multiple first protrusions 3111 arranged side by side on the first lead-out piece 311. The second conductive piece includes a second lead-out piece 312 and multiple second protrusions 3121 arranged side by side on the second lead-out piece 312. The multiple first protrusions 3111 and the multiple second protrusions 3121 are alternate with each other successively and are spaced apart from each other, forming a structure similar to a structure composed of two opposite combs with teeth of one comb inserted between teeth of the other comb.

Specifically, the multiple first protrusions 3111 and the multiple second protrusions 3121 are alternate with each other successively and spaced apart from to each other to avoid a short circuit between the first conductive piece and the second conductive piece. In this case, the first conductive piece and the second conductive piece are not connected. When adjacent first protrusions 3111 and second protrusions 3121 are connected through a conductor, the first conductive piece and the second conductive piece are connected. For example, in a case that the detection mesh 3 is applied to a battery cell, in case of leakage of electrolyte from the battery cell or ingress of water into the battery cell, since the gap between the first protrusions 3111 and the second protrusions 3121 is relatively small, the first protrusions 3111 and the second protrusions 3121 are connected. In this case, a signal indicating that the first conductive piece is connected to the second conductive piece may be outputted to the outside to facilitate monitoring of the leakage of electrolyte from or ingress of water into the battery cell.

The detection mesh 3 provided in this embodiment of the present disclosure includes the multiple first protrusions 3111 and the multiple second protrusions 3121 alternate with each other, the multiple first protrusions 3111 are connected side by side to the first lead-out piece 311, the multiple second protrusions 3121 are connected side by side to the second lead-out piece 312, in a normal state, the multiple first protrusions 3111 and the multiple second protrusions 3121 are spaced apart from each other, and when the adjacent first protrusions 3111 and second protrusions 3121 are connected through the conductor, the first conductive piece and the second conductive piece are connected, and the signal indicating that the first conductive piece is connected to the second conductive piece may be used to monitor whether the above conductor (that is, an electrolyte leakage or water entering the battery cell) to ensure the monitoring function of the detection mesh 3.

In some embodiments, the first conductive piece and the second conductive piece have the same structure.

Specifically, the expression "the first conductive piece and the second conductive piece have the same structure" may be understood as that the first lead-out piece 311 and the second lead-out piece 312 have the same structural and dimension, such as a linear shape, and that the first protrusions 3111 and the second protrusions 3121 have the same quantity. The multiple first protrusions 3111 may be uniformly arranged on the first lead-out piece 311, and the multiple second protrusions 3121 may be uniformly arranged on the second lead-out piece 312. The multiple first protrusions 3111 and the multiple second protrusions 3121 are alternate with each other successively and spaced apart from each other, which can ensure the detection uniformity and stability of the detection mesh 3.

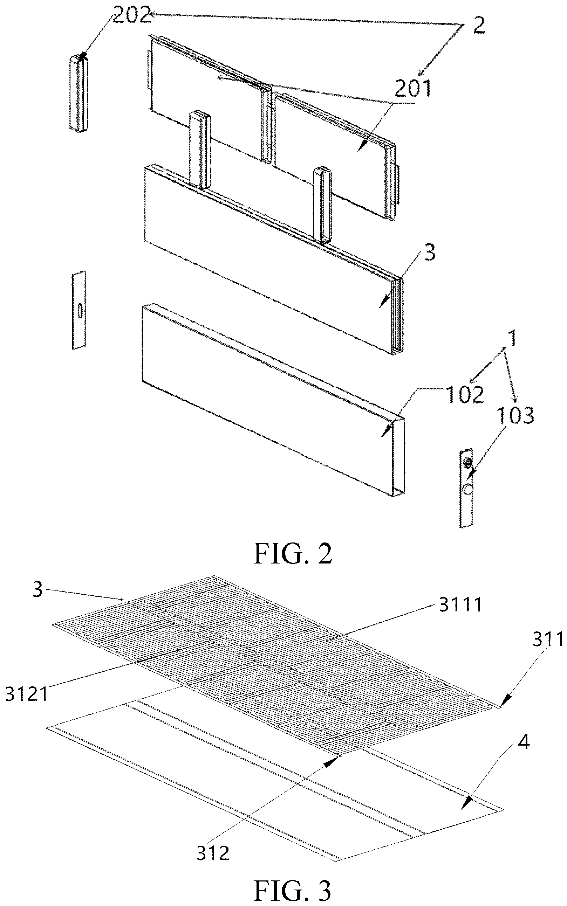

Referring to FIG. 2 to FIG. 6, an embodiment of the present disclosure further provides a battery cell 11, which includes
an enclosure 1, a cell core assembly 2, and the detection mesh 3 described above. The enclosure 1 includes a housing 102 and an end cover 103, an opening is provided on at least one side of the housing 102, and the end cover 103 covers the opening. The cell core assembly 2 is arranged in the enclosure 1.

Specifically, the cell core assembly 2 is arranged in an accommodating cavity formed by the housing 102 and the end cover 103. The cell core assembly 2 includes at least one cell core 201. The detection mesh 3 is insulatively arranged between the enclosure 1 and the cell core assembly 2, so as to avoid a short circuit between the first conductive piece and the second conductive piece of the detection mesh 3.

A connecting port 101 is arranged on the enclosure 1. The first lead-out piece 311 and the second lead-out piece 312 are both electrically connected to the connecting port 101. The connecting port 101 may be arranged on the end cover 103. The connecting port 101 helps output parameter information in the battery cell 11, and the opening helps place and take the cell core assembly 2. The cell core assembly 2 includes at least one cell core 201.

One, two, three, four, five, or more cell cores 201 may be arranged. In a case that multiple cell cores 201 are arranged, the multiple cell cores 201 may be arranged in series, or may be arranged in parallel, or may be arranged in both parallel and series. This is not limited in this embodiment of the present disclosure.

According to the battery cell 11 provided in this embodiment of the present disclosure, through the first conductive piece and the second conductive piece in the detection mesh 3, in case of leakage of electrolyte from the battery cell 11 or ingress of water into the battery cell 11, the first protrusions 3111 and the second protrusions 3121 can be connected by the conductive liquid such as the electrolyte or the water. After the connecting port 101 outputs the connection information to the outside, the leakage of electrolyte from the battery cell 11 or the ingress of water into the battery cell 11 can be quickly and conveniently found, so that the battery cell 11 can be repaired in time, thereby ensuring the operation safety and stability of the battery cell 11.

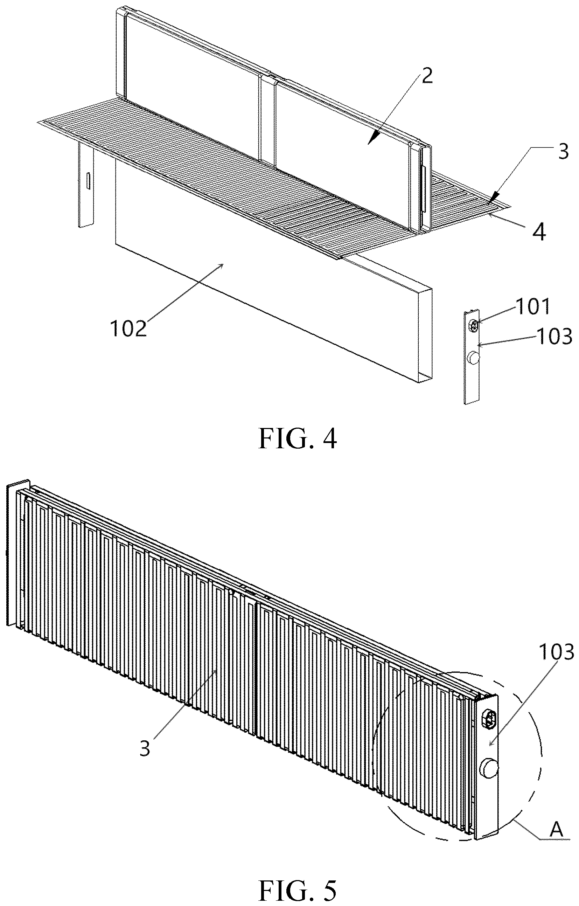

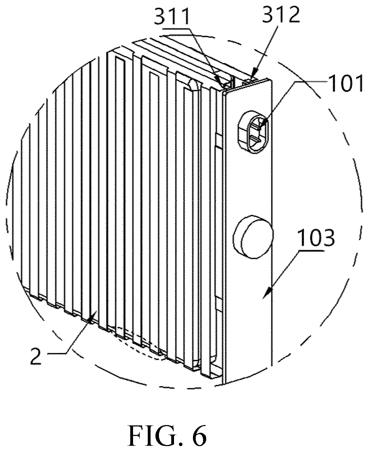

Referring to FIG. 5 and FIG. 6, the detection mesh 3 surrounds the cell core assembly 2.

During actual use, the battery cell 11 may have various arrangements. For example, a side of the end cover 103 may be placed facing upward, or the side of the end cover 103 may be placed facing sideward. In this case, the leaked electrolyte of the battery cell 11 may appear on a bottom surface, or on a side surface or on a top surface. After the detection mesh 3 surrounds the cell core assembly 2, the detection mesh 3 can monitor the leakage in time regardless of a direction of the leakage of electrolyte from the battery cell 11, which ensure the use safety of the battery cell 11. In addition, if the arrangement of the battery cell 11 is determined during preparation, the detection mesh 3 may also be laid between the cell core assembly 2 and the bottom surface of the enclosure 1.

Referring to FIG. 3 and FIG. 4, in a case that the enclosure 1 is a metal enclosure, a first insulating layer 4 is arranged between the enclosure 1 and the detection mesh 3.

It may be understood that when the enclosure 1 is the metal enclosure, in order to ensure good insulation between the enclosure 1 and the detection mesh 3, a first insulating layer 4 may be arranged between the detection mesh 3 and the enclosure 1. The first insulating layer 4 can avoid a short circuit between the detection mesh 3 and the enclosure 1 caused by contact.

A density of the alternating first protrusions 3111 and second protrusions 3121 is positively correlated with a detection precision of the detection mesh 3.

In case of leakage of electrolyte from the battery cell 11 or ingress of water into the battery cell 11, the first protrusions 3111 and the second protrusions 3121 are connected only when the conductive liquid such as the electrolyte or the water is located between the first protrusions and the second protrusions. When the first protrusions 3111 and the second protrusions 3121 are sparsely alternate with each other, a small amount of conductive liquids such as the electrolyte or the water at the beginning of the leakage of electrolyte from the battery cell 11 or the ingress of water into in the battery cell are insufficient to connect the first protrusions 3111 to the second protrusions 3121 in time, and only a large amount of conductive liquids such as the electrolyte or the water can connect the first protrusions 3111 to the second protrusions 3121. That is to say, the detection precision of the detection mesh 3 is relatively low when the first protrusions 3111 and the second protrusions 3121 are sparsely alternate with each other. When the first protrusions 3111 and the second protrusions 3121 are densely alternate with each other, even the small amount of conductive liquids such as the electrolyte or the water at the beginning of the leakage of electrolyte from the battery cell or the ingress of water into the battery cell can connect the first protrusions 3111 to the second protrusions 3121 in time. That is to say, the detection precision of the detection mesh 3 is relatively high when the first protrusions 3111 and the second protrusions 3121 are densely alternate with each other.

In some embodiments, the detection mesh 3 is a metal detection mesh. Specifically, a material of the metal detection mesh may be metal with desirable conductivity such as silver, copper, gold, aluminum, tungsten, nickel, or iron, which can improve the detection sensitivity of the detection mesh 3. In addition, since the detection mesh 3 need to surround the cell core assembly 2, the material of the metal detection mesh may be metal materials with desirable ductility such as silver, gold, aluminum, or tungsten.

The first insulating layer 4 is a plastic insulating layer or a rubber insulating layer. The plastic material and the rubber material both have desirable insulating properties and high structural strength and toughness, which can provide stable structural support for the detection mesh 3.

In some embodiments, the detection mesh 3 may be bonded to a surface of the first insulating layer 4. In this case, the detection mesh 3 and the first insulating layer 4 can be snugly attached to each other, which can improve the structural compactness of the detection mesh 3. In addition, the first insulating layer 4 may be used as a support carrier of the detection mesh 3 to avoid structural dislocation between the first conductive piece and the second conductive piece of the detection mesh 3, thereby ensuring the detection stability of the detection mesh 3.

Referring to FIG. 2, the cell core assembly 2 further includes an insulating support 202 arranged at an end of the cell core 201.

A connecting terminal is generally arranged on the end of the cell core 201. When one cell core 201 is arranged, the connecting terminal of the cell core 201 facilitates connection with other battery cells. When multiple cell cores 201 are arranged, the connecting terminal of each of the cell cores 201 is connected with other cell cores 201. When the connecting terminal is close to the detection mesh 3, a short circuit between the connecting terminal and the detection mesh 3 may occur. The arrangement of the insulating support 202 provides insulation and support for the connecting terminal.

An embodiment of the present disclosure further provides a battery module 100, which includes at least one battery, a battery management system (BMS), a tray 12, and a battery cell 11.

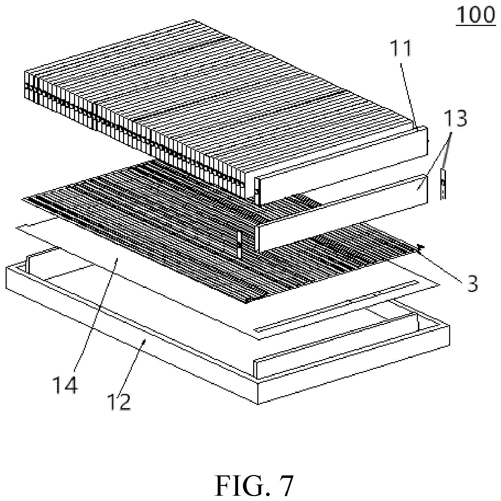

Referring to FIG. 7 to FIG. 11, an embodiment of the present disclosure further provides a battery module 100, which includes at least one battery, a BMS, a tray 12, and the detection mesh 3.

The battery is arranged in the tray 12, the detection mesh 3 is insulatively arranged between the battery and the tray 12, and the battery is electrically connected with the BMS through the connecting port 101.

The BMS can acquire operating parameters of the battery in the battery module 100 and control operation of the battery, for example, detect and control parameter information such as a battery charging/discharging voltage and an operating temperature.

The battery may be the battery cell 11 in the above embodiment. The first lead-out piece 311 and the second lead-out piece 312 are electrically connected to the BMS through the connecting port 101.

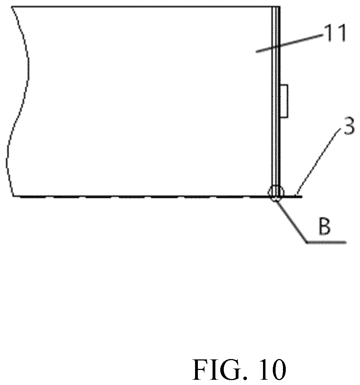

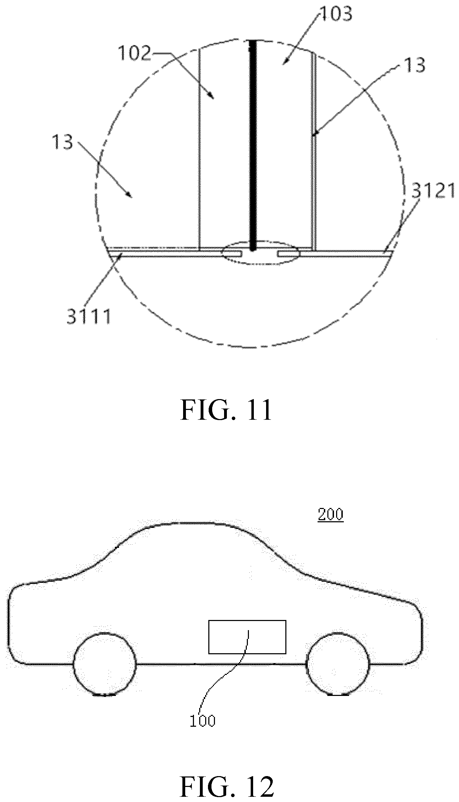

Referring to FIG. 10 and FIG. 11, in the battery module 100 provided in this embodiment of the present disclosure, the BMS obtains connection information of the first protrusions 3111 and the second protrusions 3121 through the connecting port 101 when an electrolyte leakage occurs in the battery cell 11, so as to detect the electrolyte leakage in the battery cell 11 and transmit a feedback signal in time.

In some embodiments, the BMS includes an alarm assembly. The BMS may determine that electrolyte leakage occurs inside the battery cell 11 after obtaining the connection information of the first protrusions 3111 and the second protrusions 3121. In this case, the BMS system may transmit an alarm prompt through the alarm assembly. The alarm prompt may be a sound alarm, or alarm information to be displayed on a display on the electric vehicle 200, so that a user can treat the electrolyte leakage problem in time, thereby ensuring the safety of the electric vehicle 200 and the user.

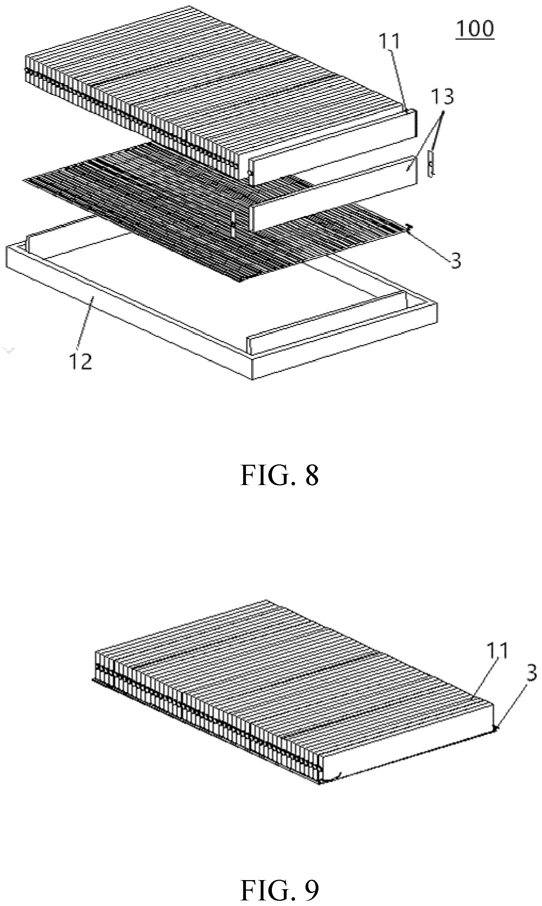

Referring to FIG. 7 and FIG. 8, the battery module 100 further includes a second insulating layer 13. The second insulating layer 13 surrounds the battery.

The detection mesh 3 is insulatively arranged between the battery and the tray 12. Since most battery enclosures are metal enclosures, in order to ensure the insulation between the detection mesh 3 and the battery, a second insulating layer 13 may be arranged around the battery.

Referring to FIG. 7, in a case that tray 12 is a metal tray, in order to ensure the insulation between the tray 12 and the detection mesh 3, a third insulating layer 14 may be arranged between the tray 12 and the detection mesh 3. In addition, referring to FIG. 8, in a case that the tray 12 is an insulating tray, even direct contact between the detection mesh 3 and the tray 12 does not cause a short circuit of the first conductive piece and the second conductive piece in the detection mesh 3. In this case, the third insulating layer 14 may be omitted.

An embodiment of the present disclosure further provides an electric vehicle 200, which includes the battery module 100 described in the above embodiment.

Specifically, the battery module 100 can quickly and conveniently find the leakage of electrolyte from the battery module 100 or the ingress of water into the battery cell of the battery module 100 through the detection mesh 3, so that the battery module 100 can be repaired in time, thereby ensuring the operation safety and stability of the electric vehicle 200.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is defined by the appended claims and their equivalents.

## Claims

1. A detection mesh (3), comprising:
a first conductive piece and a second conductive piece, wherein the first conductive piece comprises a first lead-out piece (311) and a plurality of first protrusions (3111) arranged side by side on the first lead-out piece (311); the second conductive piece comprises a second lead-out piece (312) and a plurality of second protrusions (3121) arranged side by side on the second lead-out piece (312); and the plurality of first protrusions (3111) and the plurality of second protrusions (3121) are alternate with each other successively and spaced apart from each other.

2. The detection mesh according to claim 1, wherein the first conductive piece and the second conductive piece have the same structure.

3. A battery cell (11), comprising an enclosure (1), a cell core assembly (2), and the detection mesh (3) according to claim 1 or 2, wherein
the cell core assembly (2) is arranged in the enclosure (1); the cell core assembly (2) comprises at least one cell core (201); the detection mesh (3) is insulatively arranged between the enclosure (1) and the cell core assembly (2);
a connecting port (101) is arranged on the enclosure (1); and the first lead-out piece (311) and the second lead-out piece (312) are both electrically connected to the connecting port (101).

4. The battery cell (11) according to claim 3, wherein the detection mesh (3) surrounds the cell core assembly (2).

5. The battery cell (11) according to any of claims 3 to 4, wherein the enclosure (1) is a metal enclosure; and a first insulating layer (4) is arranged between the enclosure (1) and the detection mesh (3).

6. The battery cell (11) according to any of claims 3 to 5, wherein the enclosure (1) comprises a housing (102) and an end cover (103); an opening is provided on at least one side of the housing (102); the end cover (103) covers the opening; and the connecting port (101) is arranged on the end cover (103).

7. The battery cell (11) according to any of claims 3 to 6, wherein a density of the alternating first protrusions (3111) and second protrusions (3121) is positively correlated with a detection precision of the detection mesh (3).

8. A battery module (100), comprising at least one battery, a battery management system (BMS), a tray (12), and the detection mesh (3) according to claim 1 or 2, wherein
the battery is arranged in the tray (12); the detection mesh (3) is insulatively arranged between the battery and the tray (12); and the first lead-out piece (311) and the second lead-out piece (312) are both electrically connected to the BMS.

9. The battery module (100) according to claim 8, wherein the battery is electrically connected to the BMS through the connecting port (101).

10. The battery module (100) according to claim 8 or 9, further comprising a second insulating layer (13), wherein the second insulating layer (13) surrounds the battery.

11. The battery module (100) according to claim 10, wherein the tray (12) is an insulating tray.

12. The battery module (100) according to claim 10, wherein the tray (12) is a metal tray; and a third insulating layer (14) is arranged between the tray (12) and the detection mesh (3).

13. A battery module (100), comprising at least one battery, a battery management system (BMS), and a tray (12), wherein the battery is the battery cell according to any of claims 3 to 7.

14. An electric vehicle (200), comprising the battery module (100) according to any of claims 8 to 13.
